# EUROPEAN PATENT SPECIFICATION

(11) **EP 4 426 933 B1**
(45) Date of publication and mention of the grant of the patent: **01.04.2026**
(21) Application number: 22805771.7
(22) Date of filing: 03.11.2022
(51) Int. Cl.: F03D 17/00

(54) **A METHOD FOR REDUCING BLADE FLAP LOADS IN A WIND TURBINE**
VERFAHREN ZUR REDUZIERUNG DER BLATTKLAPPENLASTEN IN EINER WINDTURBINE
PROCÉDÉ DE RÉDUCTION DE CHARGES DE VOLET DE PALE DANS UNE ÉOLIENNE

(30) Priority: 04.11.2021 DK PA202170543
(43) Date of publication of application: 11.09.2024
(73) Proprietor: VESTAS WIND SYSTEMS A/S, 8200 Aarhus N (DK)
(72) Inventor: SØRENSEN, Kim Hylling, 8200 Aarhus N (DK); LARSEN, Torben Juul, 8200 Aarhus N (DK); NIELSEN, Thomas S. Bjertrup, 8200 Aarhus N (DK)
(74) Representative: Vestas Patents Department
(86) International application number: PCT/DK2022/050232
(87) International publication number: WO 2023/078521

(56) References cited:
- EP-A1- 2 112 372
- CN-A- 102 536 683
- GB-A- 2 485 595
- US-A1- 2009 169 379

## Description

### FIELD OF THE INVENTION

The present invention relates to a method for controlling a wind turbine being provided with pre-tensioned blade connecting wires interconnecting the wind turbine blades in order to allow the wind turbine blades to mutually support each other. In the method according to the invention, the pre-tension applied to the blade connecting wires is adjusted in order to reduce blade flap loads in the wind turbine, e.g. caused by deflections of the wind turbine blades.

### BACKGROUND OF THE INVENTION

During operation of a wind turbine, as well as during standstill, the components of the wind turbine are subjected to various loads. For instance, the wind turbine blades of the wind turbine are subjected to loads originating from gravity acting on the wind turbine blades, loads originating from wind pressure on the wind turbine blades, loads originating from changes in wind direction, turbulence, etc.

As the size of wind turbine blades increases, the loads on the wind turbine also increase. In order to handle such increased loads, the amount of material used for manufacturing the wind turbine may be increased. However, this increases the weight as well as the manufacturing costs of the wind turbine.

As an alternative to increasing the amount of material used for the wind turbine, in particular for the wind turbine blades, the wind turbine may be provided with blade connecting wires, i.e. wires which interconnect the wind turbine blades. Such blade connecting wires cause the wind turbine blades to mutually support each other, in the sense that loads on the wind turbine blades are 'shared' among the wind turbine blades, via the blade connecting wires. The blade connecting wires may be pre-tensioned.

In wind turbines, the wind turbine blades may be subjected to blade flap loads, i.e. loads along a flapwise direction. Such blade flap loads may, e.g., be caused by or related to blade tip deflection of the wind turbine blades. In the case of an upwind wind turbine, large blade tip deflections may introduce a risk of collisions between the blade tips and the tower. This becomes increasingly relevant as the length of wind turbine blades increases. In order to avoid this, the stiffness of the wind turbine blades may be increased, and this may increase the mass of the blades. Alternatively or additionally, a coning angle of the wind turbine blades may be increased, thereby positioning the blade tips further away from the tower. However, a large coning angle may introduce undesired uneven loads in other parts of the wind turbine, such as the drive train, the main shaft, etc.

CN 102536683 B discloses a zonal cable device for enhancing stability of blades of large wind turbines. The zonal cable device comprises a zonal cable system and a cable tension adjusting system. The cable tension adjusting system comprises an automatic controller connected with a zonal tension screw adjuster via a control line. Relaxed tension occurs during the operation of the wind turbine. In this case, after the relaxed tension is sensed by the tension sensor, the zonal tension screw adjuster is rotated on a front tension bearing shaft to adjust the tension of the zonal cable system, in order to allow for the tension of the blade on the rotating surface to reach a reasonable set value. All adjustment processes can be controlled and automatically completed by the automatic controller mounted in the wind turbine hub.

US 2009/169379 A discloses a wind energy capture system with a blade/sail implementation using retractable sails. Further is disclosed supporting the turbine blades at their tip end by using a set of support cables which provide tension.

### DESCRIPTION OF THE INVENTION

It is an object of embodiments of the invention to provide a method for controlling a wind turbine in which blade flap loads, in particular blade tip deflections, are handled in an easy and cost effective manner.

The invention provides a method for controlling a wind turbine, according to claim 1, the wind turbine comprising a tower, a nacelle mounted on the tower, a hub mounted rotatably on the nacelle, and three or more wind turbine blades, each wind turbine blade extending between a root end connected to the hub via a pitch mechanism, and a tip end, the wind turbine further comprising blade connecting wires, each blade connecting wire extending between a connection point on one wind turbine blade and a connection point on a neighbouring wind turbine blade, each blade connecting wire thus interconnecting two neighbouring wind turbine blades, and pre-tension wires, each pre-tension wire being connected to one of the blade connecting wires, at a position which is distanced from each of the connection points on the wind turbine blades, and to a pre-tension adjustment mechanism, each pre-tension wire thus providing pre-tension to the blade connecting wire which it is connected to, the method comprising the steps of:
- measuring at least one parameter of the wind turbine blades of the wind turbine,
- deriving an estimate for a blade flap load for each wind turbine blade from the at least one measured parameter, and
- controlling the pre-tension adjustment mechanism in response to the estimated blade flap loads of the wind turbine blades, thereby adjusting the pre-tension provided by the pre-tension wires to the blade connecting wires, in order to reduce blade flap loads on the wind turbine blades.

Thus, the method according to the invention is a method for controlling a wind turbine. The wind turbine is a pitch controlled wind turbine, i.e. a wind turbine which comprises wind turbine blades which are able to rotate about a substantially longitudinal pitch axis, in order to adjust an angle of attack between the wind turbine blades and the incoming wind, during operation of the wind turbine.

The wind turbine comprises a tower and a nacelle mounted on the tower. The wind turbine further comprises a hub mounted rotatably on the nacelle and three or more wind turbine blades. Each wind turbine blade extends between a root end which is connected to the hub via a pitch mechanism, and a tip end. Thus, the wind turbine blades rotate along with the hub, relative to the nacelle, and the tip ends of the wind turbine blades point away from the hub. Since the wind turbine blades are connected to the hub via pitch mechanisms, each wind turbine blade is able to rotate relative to the hub, i.e. to perform pitching movements. The hub and the wind turbine blades form a rotor of the wind turbine.

The nacelle is normally mounted on the tower via a yaw system allowing the nacelle to rotate relative to the tower in order to appropriately orient the rotor in accordance with the direction of the wind.

The wind turbine further comprises blade connecting wires. Each blade connecting wire extends between a connection point on one wind turbine blade and a connection point on a neighbouring wind turbine blade. Accordingly, each blade connecting wire interconnects two neighbouring wind turbine blades.

The wind turbine further comprises pre-tension wires. Each pre-tension wire is connected to one of the blade connecting wires and to a pre-tension adjustment mechanism. Accordingly, the pre-tension wires pull the blade connecting wires towards the pre-tension adjustment mechanism, and thereby the pre-tension wires provide pre-tension to the blade connecting wires. Furthermore, the pre-tension provided to the blade connecting wires by the pre-tension wires can be adjusted by appropriately operating or manipulating the pre-tension adjustment mechanism.

The pre-tension adjustment mechanism may be arranged in the hub, at the hub or near the hub. As an alternative, the pre-tension adjustment mechanism may be arranged in the blade root of one or more of the wind turbine blades, or in a part of the wind turbine blades between the root end and the connection point.

In the present context the term 'wire' should be interpreted broadly to cover any suitable kind of tension element, such as metal wires or ropes, fibre ropes, composite pultrusion, metal rods, etc.

The blade connecting wires may have a stiffness which differs from the stiffness of the pre-tension wires, or the stiffness of the blade connecting wires and the pre-tension wires may be identical.

The pre-tension wires may, e.g., be connected to the blade connecting wires at a position which is distanced from each of the connecting points on the wind turbine blades, e.g. with substantially equal distance to the connecting points, i.e. approximately halfway between the wind turbine blades along the blade connecting wire.

The pre-tensioned blade connecting wires cause the wind turbine blades to mutually support each other, in the sense that loads on the wind turbine blades, in particular edgewise loads and flapwise loads, are 'shared' among the wind turbine blades, via the pre-tensioned blade connecting wires. Thereby the loads on the wind turbine blades, during operation as well as during standstill, can be handled without requiring higher material thickness, and thereby increased weight and higher manufacturing costs.

The wind turbine may be an upwind wind turbine. In this case the rotor of the wind turbine faces the incoming wind, and thereby the flapwise loads on the wind turbine blade, originating from the wind, push the wind turbine blades towards the tower and the rotor plane going through the hub.

As an alternative, the wind turbine may be a downwind wind turbine. In this case the rotor of the wind turbine is directed opposite to the incoming wind, and thereby the flapwise loads on the wind turbine blades, originating from the wind, push the wind turbine blades away from the hub and the tower.

In the method according to the invention at least one parameter of the wind turbine blades of the wind turbine is initially measured. The measured parameter(s) may relate to loads, strains, vibrations, movements, accelerations, etc. of the wind turbine blades, in particular along a flapwise direction. In any event, the measured parameter(s) relate to the wind turbine blades, and thereby reflect(s) conditions experienced by the wind turbine blades, and thereby by the rotor, at positions at or near the wind turbine blades, by blade bearing connections, at or near blade bearing to hub connections, etc.

Next, an estimate for a blade flap load for each wind turbine blade is derived from the at least one measured parameter.

In the present context the term 'blade flap load' should be interpreted to mean a load on the wind turbine blade along a flapwise direction, i.e. along a direction which is substantially perpendicular to the chord of the wind turbine blade, i.e. substantially along the thickness of the wind turbine blade. The flapwise direction is normally primarily perpendicular to the rotor plane defined by the wind turbine blades. Accordingly, the blade flap loads may be regarded as the loads on the wind turbine blades which are out-of-plane with respect to the rotor plane.

Since the estimated blade flap loads are derived from the measured parameters of the wind turbine blades, they reflect actual flapwise loads experienced by the wind turbine blades.

Finally, the pre-tension adjustment mechanism is controlled in response to the estimated blade flap loads of the wind turbine blades, thereby adjusting the pre-tension provided by the pre-tension wires.

By controlling the pre-tension adjustment mechanism, the pre-tension applied by the pre-tension wires to the blade connecting wires is adjusted. Thereby the mutual support among the wind turbine blades is also adjusted. More specifically, each pre-tension wire determines the pre-tension applied to the blade connecting wire which it is connected to, and thereby the mutual support among the two wind turbine blades which are interconnected by that blade connecting wire.

Since the pre-tension adjustment mechanism is controlled in response to the estimated blade flap loads, the pre-tension provided by the pre-tension wires is adjusted in a manner which takes the currently applying blade flap loads into account, and which can thereby mitigate any adverse effects caused by the blade flap loads, including risk of collisions between the blade tips and the tower and/or risk of undesired extreme loads on the wind turbine, notably on the wind turbine blades.

Handling blade flap loads of the wind turbine blades by appropriately controlling the pre-tension adjustment mechanism, thereby adjusting the pre-tension applied to the blade connecting wires by the pre-tension wires, based on actual measurements of parameters reflecting blade flap loads and/or blade tip deflections experienced by the wind turbine blades, is an easy and cost effective way of handling such blade flap loads. Furthermore, the blade flap loads can be handled fast and accurately.

The step of controlling the pre-tension adjustment mechanism may comprise increasing a pre-tension provided by one or more of the pre-tension wires in the case that the estimated blade flap load of at least one of the wind turbine blades exceeds a predefined threshold value.

According to this embodiment, in the case that it is established that at least one of the wind turbine blades is experiencing blade flap loads which exceed a predefined threshold value representing an acceptable load level, actions are initiated in order to mitigate or counteract the blade flap loads. More specifically, the pre-tension provided by one or more of the pre-tension wires is increased, thereby increasing the mutual support of the wind turbine blades. This will decrease the blade flap loads in all situations where there is a positive flap moment that deflects the wind turbine blades towards the tower. This is, e.g., the case during normal operation with power production of the wind turbine.

For instance, in the case of an upwind wind turbine, wind acting on the rotor will cause a blade flap moment on the wind turbine blades in a direction towards the tower. In the case that the wind turbine blades define a coning angle relative to the hub, an increase in pre-tension will pull the wind turbine blades forwards, i.e. in a direction away from the tower, thereby counteracting the blade flap moment caused by the wind.

In stop situations, a negative flap moment, which deflects the wind turbine blades away from the tower, may occur. In such case the pre-tension provided by one or more of the pre-tension wires may instead be reduced.

The step of controlling the pre-tension adjustment mechanism may further comprise adjusting the pre-tension provided by the pre-tension wires as a function of azimuth position of the wind turbine blades.

In the present context the term 'azimuth position of the wind turbine blades' should be interpreted to mean an angular position of the wind turbine blade with respect to the rotation of the rotor.

The flap loads on the wind turbine blades are expected to vary as the wind turbine blades rotates along with the hub, i.e. as a function of azimuth position of the wind turbine blade. For instance, an azimuth position where the wind turbine blade points directly downwards, sometimes referred to as a 'six o'clock position', corresponds to the wind turbine blade passing the tower. At this position, large blade deflections may be undesirable, since this introduces the risk of collisions between the wind turbine blade and the tower. Furthermore, in the case of wind shear, i.e. variations in wind speed along a vertical direction, the flap loads originating from wind pressure on the wind turbine blade will vary substantially sinusoidally as a function of azimuth position, e.g. with a maximum at the azimuth position where the wind turbine blade points directly upwards, sometimes referred to as a 'twelve o'clock position, and a minimum at the 'six o'clock position'. Alternatively, in the case of negative wind shear, the flap loads may be at a maximum at the 'six o'clock position' and at a minimum at the 'twelve o'clock position'. Negative wind shear may, e.g., occur in a turbulence inducing terrain, such as certain mountainous terrains. Furthermore, in the case that the wind turbine in arranged in a wind farm, it may be positioned in half wake of another wind turbine in a specific wind direction sector. This may cause maximum flap moments at or near a 'three o'clock position and minimum flap moments at or near a 'nine o'clock position'. In this case the pre-tension provide by the pre-tension wires may be adjusted accordingly as a function of azimuth position of each blade.

Accordingly, by adjusting the pre-tension provided by the pre-tension wires as a function of azimuth position of the wind turbine blades, such expected cyclical variations in the flap loads of the wind turbine blades can be taken into account and handled.

The step of controlling the pre-tension mechanism may comprise individually adjusting the pre-tension provided by the respective pre-tension wires. According to this embodiment, the adjustment of the pre-tension provided by each pre-tension wire is adjusted independently of the adjustments of the pre-tension provided by each of the other pre-tension wires. Thereby the adjustments of the provided pre-tensions can be accurately designed to counteract the detected blade flap loads, e.g. increasing the pre-tension applied in parts of the rotor where increased mutual support of the wind turbine blades is required and/or decreasing the pre-tension applied in parts of the rotor where decreased mutual support of the wind turbine blades is required. For instance, in the case that the estimated flap loads differ from one wind turbine blade to another, the pre-tension provided by the pre-tension wires may be adjusted in such a manner that a higher pre-tension is provided in the parts of the rotor where the estimated flap loads are highest, than in other parts of the rotor.

As an alternative, the adjustable pre-tension mechanism may be controlled to adjust the pre-tension provided by the respective pre-tension wires in a substantially identical manner.

The step of deriving an estimate for a blade flap load for each wind turbine blade may comprise estimating a blade tip deflection for each wind turbine blade.

In the present context the term 'blade tip deflection' should be interpreted to mean a distance which the tip of the wind turbine blade has been moved from a neutral position, due to deflection of the wind turbine blade. Thus, blade tip deflection reflects the deflection of the blade in a flapwise direction, and is thereby also closely related to flap loads on the wind turbine blade.

Furthermore, the blade tip deflection is very relevant with respect to tower passage, since a large blade tip deflection during tower passage introduces a risk of collisions between the wind turbine blade and the tower, at least for upwind wind turbines. Thus, the pre-tension adjustment mechanism may, e.g., be controlled in such manner that the blade tip deflection during tower passage remains below a certain threshold value which ensures clearance of the tower, while the blade tip deflection is allowed to exceed this threshold value at other azimuth positions. Thereby collisions between wind turbine blades and tower can be prevented without increasing the manufacturing costs, and with minimal wear on the pre-tension adjustment mechanism, the blade connecting wires and the pre-tension wires. In particular, this allows for longer wind turbine blades without having to increase the stiffness of the wind turbine blades, and thereby the weight of the wind turbine blades.

The blade tip deflection may, e.g., be measured directly, such as in the form of a distance measurement.

Alternatively or additionally, the step of deriving an estimate for a blade flap load for each wind turbine blade may comprise estimating a rotor thrust.

The step of measuring at least one parameter of the wind turbine blades of the wind turbine may comprise measuring a flap moment for each of the wind turbine blades.

In the present context the term 'flap moment' should be interpreted to mean a moment measured at the wind turbine blade in a flapwise direction, i.e. in a direction which is substantially perpendicular to the chord of the wind turbine blade, i.e. substantially along the thickness of the wind turbine blade, and normally extending out of the rotor plane.

The flap moment may, e.g., be a flap root moment, i.e. a flap moment measured at or near the root of the wind turbine blade. As an alternative, the flap moment may be measured in another part of the wind turbine blade, e.g. in a part of the blade which is arranged between the root end and the connection point, for instance within an inner 20% of the blade length or radius. The flap moment may be measured directly on the wind turbine blades. As an alternative, an indirect measurement of the flap moment may be obtained by performing measurements on other parts of the wind turbine, e.g. the hub or the nacelle, and deriving the flap moment therefrom. For instance, a measure for blade flap moments may be derived from a measurement of a strain level in the hub.

The flap moments of the wind turbine blades may, e.g., be measured by measuring strain at the wind turbine blades, using a suitable strain sensor, such as one or more strain gauges or one or more optical fibres.

As an alternative, the step of measuring at least one parameter of the wind turbine blades of the wind turbine may comprise measuring a tension of each of the pre-tension wires. The tension in the pre-tension wires may be measured directly or indirectly, e.g. by measuring a hydraulic pressure or piston stroke. The tension of a given pre-tension wire is an indication of how much or to which extent the pre-tension wire is pulling the blade connecting wire it is connected to, and thereby it provides a measure for the pre-tension which the pre-tension wire is currently providing to the blade connecting wire.

Alternatively or additionally, the step of measuring at least one parameter of the wind turbine may comprise measuring another suitable parameter which is related to flap loads, e.g. a distance measurement at the blade tips or a GPS positioning measurement of the blade tips.

The method may further comprise the step of measuring one or more wind conditions at the position of the wind turbine, and the step of deriving an estimate for a blade flap load for each wind turbine blade may further be performed on the basis of the measured wind condition(s).

In the present context the term 'wind conditions' should be interpreted to mean the wind prevailing at the site where the wind turbine is positioned, and which the wind turbine is therefore subjected to. The wind conditions may, e.g., include wind speed, wind direction, wind shear, gust conditions, turbulence conditions, slope, air density, etc. In particular, negative wind shear and high turbulence may result in high blade deflections during tower passage. Wind shear can be measured by means of, e.g., cup anemometers arranged at several heights, or by using upstream Lidar scanning.

Thus, according to this embodiment, expected blade flap loads originating from wind acting on the wind turbine blades are estimated, based on the measured wind conditions, and are taken into account when the total blade flap load is estimated. This may, e.g., include estimating a probability of large blade flap loads and/or large blade tip deflections, caused by the wind acting on the wind turbine blades.

According to one embodiment, the pre-tension adjustment mechanism may be controlled in such a manner that the pre-tension provided by the pre-tension wires is adjusted, e.g. increased, during situations which may cause decrease in expected lifetime for specific parts of the wind turbine, such as blade bearing, blade root, hub and/or blade-to-hub connection. In this case the pre-tension provided by the pre-tension wires may be adjusted in order to reduce the blade flap loads, while the wind turbine continues to operate. This will introduce higher wear on the pre-tension adjustment mechanism, the blade connecting wires and/or the blade connecting wires, but this may be considered acceptable in view of the expected resulting reduced wear on the main rotor components, and the possibility of continued power production.

### BRIEF DESCRIPTION OF THE DRAWINGS

The invention will now be described in further detail with reference to the accompanying drawings in which
Fig. 1 is a front view of a wind turbine being controlled in accordance with a method according to an embodiment of the invention,
Figs. 2 and 3 are block diagrams illustrating a method according to embodiments of the invention, and
Fig. 4 shows two graphs illustrating reduction of blade tip deflection by performing a method according to an embodiment of the invention.

### DETAILED DESCRIPTION OF THE DRAWINGS

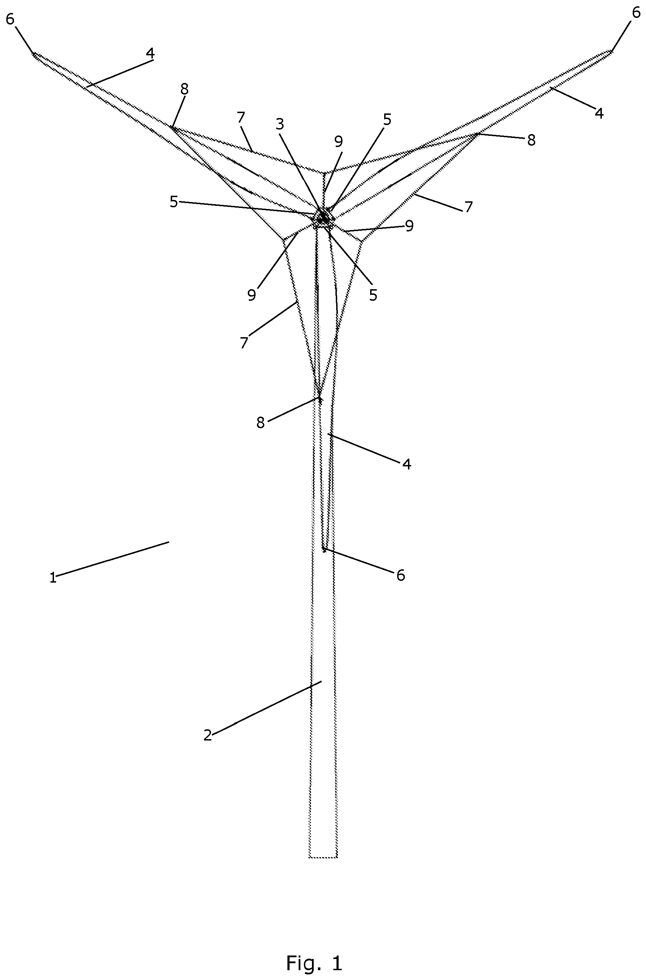

Fig. 1 is a front view of a wind turbine 1 being controlled in accordance with a method according to an embodiment of the invention. The wind turbine 1 comprises a tower 2 and a nacelle (not visible) mounted rotatably on the tower 2. A hub 3 carrying three wind turbine blades 4 is mounted rotatably on the nacelle. Accordingly, the wind turbine blades 4 rotate along with the hub 3, relative to the nacelle. The wind turbine blades 4 extend between a root end 5 connected to the hub 3 via a pitch mechanism, and a tip end 6 pointing away from the hub 3.

The wind turbine 1 further comprises three blade connecting wires 7. Each of the blade connecting wires 7 extends between a connection point 8 on one wind turbine blade 4 and a connection point 8 on a neighbouring wind turbine blade 4. Thereby each wind turbine blade 4 is connected to its neighbouring wind turbine blades 4 by respective blade connecting wires 7. This allows the wind turbine blades 4 to mutually support each other, as described above.

The wind turbine 1 further comprises three pre-tension wires 9. Each pre-tension wire 9 is connected to one of the blade connecting wires 7 and to a pre-tension adjustment mechanism (not shown) arranged in the hub 3. Thereby each pre-tension wire 9 provides a pre-tension in the blade connecting wire 7 which it is connected to, and the provided pre-tension determines to which extent the wind turbine blades 4 being interconnected by the blade connecting wire 7 support each other. The provided pre-tension can be adjusted by means of the pre-tension adjustment mechanism, thereby adjusting the mutual support of the wind turbine blades 4.

The wind turbine 1 of Fig. 1 may be controlled in the following manner. Initially, at least one parameter of the wind turbine blades 4 of the wind turbine 1, e.g. a flap root moment, is measured. Next, an estimate for a blade flap load, e.g. including an estimate for a blade tip deflection, for each wind turbine blade 4 is derived from the at least one measured parameter.

Finally, the pre-tension adjustment mechanism is controlled in response to the estimated blade flap loads. Thereby the pre-tension provided by the pre-tension wires 9 is adjusted in accordance with the blade flap loads, and thereby the blade flap loads are reduced.

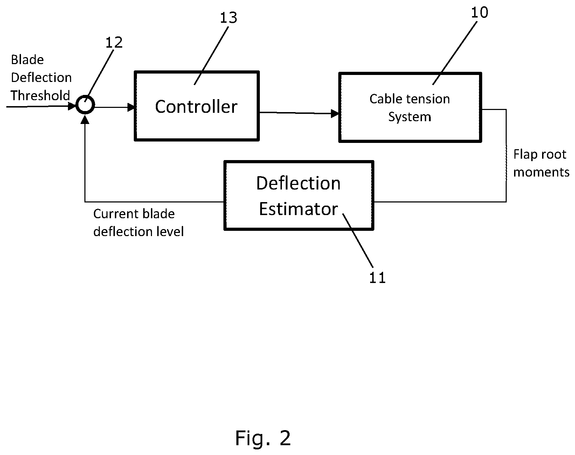

Fig. 2 is a block diagram illustrating a method according to an embodiment of the invention. The method illustrated in Fig. 2 may, e.g., be applied for controlling a wind turbine of the kind illustrated in Fig. 1.

A pre-tension adjustment mechanism 10 is controlled in order to provide pre-tension to blade connecting wires via pre-tension wires connected to the blade connecting wires and to the pre-tension adjustment mechanism 10, in the manner described above with reference to Fig. 1.

At least one parameter of the wind turbine blades, e.g. flap root moments of each of the wind turbine blades or tension in the pre-tension wires, is measured. The measured flap root moments are supplied to a deflection estimator 11, where a currently occurring blade tip deflection is estimated, based on the measured flap root moments.

The estimated blade tip deflection is supplied to a comparator 12, which also receives a signal representing a desired blade tip deflection level, in the form of a threshold value for blade tip deflection which should not be exceeded. The result of the comparison is supplied to a controller 13 which controls the pre-tension adjustment mechanism 10.

The controller 13 then causes the pre-tension adjustment mechanism 10 to adjust the pre-tension provided by each of the pre-tension wires in accordance with the comparison signal. This could, e.g., include increasing the pre-tension provided by one or more of the pre-tension wires in the case that the estimated blade tip deflection approaches or exceeds the threshold value, in order to thereby increase the mutual support among the wind turbine blades, and thereby reduce the blade flap loads and the blade tip deflection.

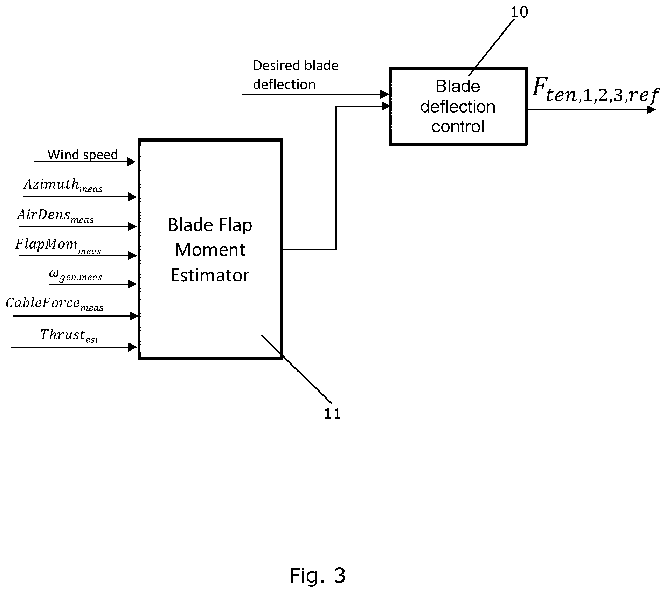

Fig. 3 is a block diagram illustrating a method according to an embodiment of the invention. The method illustrated in Fig. 3 may, e.g., be applied for controlling a wind turbine of the kind illustrated in Fig. 1 and/or the method illustrated in Fig. 3 may form part of the method described above with reference to Fig. 2.

A number of relevant measured parameters relating to the wind turbine blades, in the form of wind speed, azimuth position of the rotor, air density, flap moments of the wind turbine blades, generator torque, tension of the pre-tension wires and thrust on the rotor, are supplied to a blade flap moment estimator 11. Based thereon, the blade flap moment estimator 11 derives an estimate for the blade flap moment, e.g. including an estimate for blade tip deflection, and supplies this to a pre-tension adjustment mechanism 10, which also received a desired blade tip deflection, e.g. in the form of a threshold value for blade tip deflection which should not be exceeded. Based thereon, the pre-tension adjustment mechanism 10 adjusts the pre-tension provided by the pre-tension wires in order to ensure that the threshold value for the blade tip deflection is not exceeded, and possibly in order to reduce flap loads on the wind turbine blades.

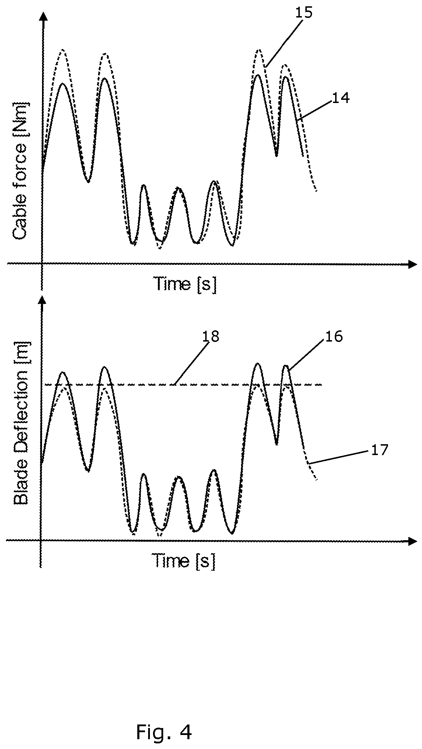

Fig. 4 shows two graphs illustrating reduction of blade tip deflection by performing a method according to an embodiment of the invention. The upper graph shows pulling force, i.e. pre-tension, provided by the pre-tension wires to the blade connecting wires as a function of time, and the lower graph shows blade tip deflection as a function of time, and corresponding to the applied pre-tension shown in the upper graph.

In the upper graph, the solid line 14 represents applied pre-tension without performing the method according to the invention, and the dashed line 15 represents applied pre-tension as adjusted as a result of performing the method according to the invention.

In the lower graph, the solid line 16 represents blade tip deflection of the wind turbine blades when the method according to the invention is not performed, i.e. when the applied pre-tension follows the solid line 14 of the upper graph. The dashed line 17 represents blade tip deflection of the wind turbine blades when the method according to the invention is performed, i.e. when the applied pre-tension is adjusted in accordance with the dashed line 15 of the upper graph. The horizontal line 18 represents an upper threshold value for the blade tip deflection, which should not be exceeded.

It can be seen that, when the blade tip deflection is low, i.e. well below the threshold value 18, the applied pre-tension is essentially not adjusted, i.e. the dashed line 15 of the upper graph is essentially coinciding with the solid line 14 of the upper graph.

However, when the blade tip deflection approaches the threshold value 18, then the applied pre-tension is adjusted in such a manner that a higher pre-tension is applied, resulting in a reduction in the blade tip deflection, thereby preventing that the blade tip deflection exceeds the threshold value 18. It can also be seen that controlling the pre-tension without the adjustment, i.e. according to the solid line 14, would result in the threshold value being exceeded, cf. the solid line 16 in the lower graph.

## Claims

1. A method for controlling a wind turbine (1), the wind turbine (1) comprising a tower (2), a nacelle mounted on the tower (2), a hub (3) mounted rotatably on the nacelle, and three or more wind turbine blades (4), each wind turbine blade (4) extending between a root end (5) connected to the hub (3) via a pitch mechanism, and a tip end (6), the wind turbine (1) further comprising blade connecting wires (7), each blade connecting wire (7) extending between a connection point (8) on one wind turbine blade (4) and a connection point (8) on a neighbouring wind turbine blade (4), each blade connecting wire (7) thus interconnecting two neighbouring wind turbine blades (4), and pre-tension wires (9), each pre-tension wire (9) being connected to one of the blade connecting wires (7), at a position which is distanced from each of the connection points (8) on the wind turbine blades (4), and to a pre-tension adjustment mechanism (10), each pre-tension wire (9) thus providing pre-tension to the blade connecting wire (7) which it is connected to, the method comprising the steps of:
- measuring at least one parameter of the wind turbine blades (4) of the wind turbine (1),
- deriving an estimate for a blade flap load for each wind turbine blade (4) from the at least one measured parameter, and
- controlling the pre-tension adjustment mechanism (10) in response to the estimated blade flap loads of the wind turbine blades (4), thereby adjusting the pre-tension provided by the pre-tension wires (9) to the blade connecting wires (7), in order to reduce blade flap loads on the wind turbine blades (4).

2. A method according to claim 1, wherein the step of controlling the pre-tension adjustment mechanism (10) comprises increasing a pre-tension provided by one or more of the pre-tension wires (9) in the case that the estimated blade flap load of at least one of the wind turbine blades (4) exceeds a predefined threshold value.

3. A method according to claim 1 or 2, wherein the step of controlling the pre-tension adjustment mechanism (10) further comprises adjusting the pre-tension provided by the pre-tension wires (9) as a function of azimuth position of the wind turbine blades (4).

4. A method according to any of the preceding claims, wherein the step of controlling the pre-tension mechanism (10) comprises individually adjusting the pre-tension provided by the respective pre-tension wires (9).

5. A method according to any of the preceding claims, wherein the step of deriving an estimate for a blade flap load for each wind turbine blade (4) comprises estimating a blade tip deflection for each wind turbine blade (4).

6. A method according to any of the preceding claims, wherein the step of measuring at least one parameter of the wind turbine blades (4) of the wind turbine (1) comprises measuring a flap moment for each of the wind turbine blades (4).

7. A method according to any of claims 1-5, wherein the step of measuring at least one parameter of the wind turbine blades (4) of the wind turbine (1) comprises measuring a tension of each of the pre-tension wires (9).

8. A method according to any of the preceding claims, further comprising the step of measuring one or more wind conditions at the position of the wind turbine (1), and wherein the step of deriving an estimate for a blade flap load for each wind turbine blade (4) is further performed on the basis of the measured wind condition(s).

## Patentansprüche

1. Verfahren zum Steuern einer Windkraftanlage (1), wobei die Windkraftanlage (1) einen Turm (2), eine auf dem Turm (2) montierte Gondel, eine drehbar auf der Gondel montierte Nabe (3) und drei oder mehr Windkraftanlagenblätter (4) umfasst, wobei sich jedes Windkraftanlagenblatt (4) zwischen einem Wurzelende (5), das über einen Anstellwinkelmechanismus mit der Nabe (3) verbunden ist, und einem Spitzenende (6) erstreckt, wobei die Windkraftanlage (1) ferner Rotorblatt-Verbindungsdrähte (7), wobei sich jeder Rotorblatt-Verbindungsdraht (7) zwischen einem Verbindungspunkt (8) eines Windkraftanlagenblatts (4) und einem Verbindungspunkt (8) eines benachbarten Windkraftanlagenblatts (4) erstreckt und somit jeweils zwei benachbarte Windkraftanlagenblätter (4) miteinander verbindet, und Vorspanndrähte (9) umfasst, wobei jeder Vorspanndraht (9) mit einem der Rotorblatt-Verbindungsdrähte (7) an einer Position, die von jedem der Verbindungspunkte (8) an den Windkraftanlagenblättern (4) beabstandet ist, und mit einem Vorspannungseinstellmechanismus (10) verbunden ist, wobei jeder Vorspanndraht (9) somit Vorspannung an dem Rotorblatt-Verbindungsdraht (7), mit dem es verbunden ist, bereitstellt, wobei das Verfahren die folgenden Schritte umfasst:
- Messen mindestens eines Parameters der Windkraftanlagenblätter (4) der Windkraftanlage (1),
- Ableiten einer Schätzung für eine Blattklappenbelastung für jedes Windkraftanlagenblatt (4) aus dem mindestens einen gemessenen Parameter und
- Steuern des Vorspannungseinstellmechanismus (10) in Abhängigkeit von den geschätzten Blattklappenbelastungen der Windkraftanlagenblätter (4), wodurch die von den Vorspannungsdrähten (9) auf die Rotorblatt-Verbindungsdrähte (7) ausgeübte Vorspannung angepasst wird, um die Blattklappenbelastungen auf die Windkraftanlagenblätter (4) zu reduzieren.

2. Verfahren nach Anspruch 1, wobei der Schritt zum Steuern des Vorspannungseinstellmechanismus (10) Erhöhen einer Vorspannung, die durch einen oder mehreren Vorspannungsdrähte (9) bereitgestellt wird, umfasst, falls die geschätzte Blattklappenbelastung mindestens eines der Windkraftanlagenblätter (4) einen vordefinierten Schwellenwert überschreitet.

3. Verfahren nach Anspruch 1 oder 2, wobei der Schritt zum Steuern des Vorspannungseinstellmechanismus (10) ferner Einstellen der Vorspannung, die durch die Vorspannungsdrähte (9) bereitgestellt wird, in Abhängigkeit von einer Azimutposition der Windkraftanlagenblätter (4) umfasst.

4. Verfahren nach einem der vorstehenden Ansprüche, wobei der Schritt zum Steuern des Vorspannmechanismus (10) individuelles Einstellen der Vorspannung, die durch die Vorspannungsdrähte (9) bereitgestellt wird, umfasst.

5. Verfahren nach einem der vorstehenden Ansprüche, wobei der Schritt zum Ableiten einer Schätzung für eine Blattklappenbelastung für jedes Windkraftanlagenblatt (4) Schätzen einer Blattspitzenauslenkung für jedes Windkraftanlagenblatt (4) umfasst.

6. Verfahren nach einem der vorstehenden Ansprüche, wobei der Schritt zum Messen mindestens eines Parameters der Windkraftanlagenblätter (4) der Windkraftanlage (1) Messen eines Klappenmoments für jedes der Windkraftanlagenblätter (4) umfasst.

7. Verfahren nach einem der Ansprüche 1-5, wobei der Schritt zum Messen mindestens eines Parameters der Windkraftanlagenblätter (4) der Windkraftanlage (1) Messen einer Spannung jedes der Vorspanndrähte (9) umfasst.

8. Verfahren nach einem der vorstehenden Ansprüche, ferner umfassend den Schritt zum Messen einer oder mehrerer Windbedingungen am Standort der Windkraftanlage (1) und wobei der Schritt zum Ableiten einer Schätzung für eine Blattklappenbelastung für jedes Windkraftanlagenblatt (4) ferner auf der Grundlage der gemessenen Windbedingungen durchgeführt wird.

## Revendications

1. Procédé de commande d'une éolienne (1), l'éolienne (1) comprenant une tour (2), une nacelle montée sur la tour (2), un moyeu (3) monté de manière rotative sur la nacelle, et trois ou plusieurs pales d'éolienne (4), chaque pale d'éolienne (4) s'étendant entre une extrémité de pied (5) reliée au moyeu (3) par un mécanisme de pas et une extrémité de pale (6), l'éolienne (1) comprenant en outre des câbles de liaison des pales (7), chaque câble de liaison des pales (7) s'étendant entre un point de connexion (8) sur une pale de l'éolienne (4) et un point de connexion (8) sur une pale d'éolienne avoisinante (4), chaque câble de liaison des pales (7) reliant ainsi deux pales d'éolienne avoisinantes (4), et des câbles de prétension (9), chaque câblé de prétension (9) étant connecté à l'un des câbles de liaison des pales (7) au niveau d'une position qui est distancée de chacun des points de connexion (8) sur les pales de l'éolienne (4), et au mécanisme de réglage de la prétension (10), chaque câble de prétension (9) fournissent ainsi la prétension au câble de prétension de la pale (7) auquel il est connecté, le procédé comprenant les étapes suivantes :
- la mesure d'au moins un paramètre des pales (4) de l'éolienne (1),
- la déduction d'une estimation de la charge de battement de pale pour chaque pale d'éolienne (4) à partir d'au moins un paramètre mesuré, et
- la commande du mécanisme de réglage de la prétension (10) en réponse aux charges de battement de pales estimées des pales de l'éolienne (4), ajustant ainsi la prétension fournie par les câbles de prétension (9) aux câbles de connexion des pales (7), afin de réduire les charges de battement de pales sur les pales de l'éolienne (4).

2. Procédé selon la revendication 1, dans lequel l'étape de commande du mécanisme de réglage de la prétension (10) comprend l'augmentation d'une prétension fournie par un ou plusieurs des câbles de prétension (9) lorsque la charge de battement de pale estimée d'au moins une des pales de l'éolienne (4) dépasse une valeur de seuil prédéfinie.

3. Procédé selon la revendication 1 ou 2, dans lequel l'étape de commande du mécanisme de réglage de la prétension (10) comprend en outre le réglage de la prétension fournie par les câbles de prétension (9) en fonction de la position azimutale des pales de l'éolienne (4).

4. Procédé selon l'une quelconque des revendications précédentes, dans lequel l'étape de commande du mécanisme de prétension (10) comprend le réglage individuel de la prétension fournie par les câbles de prétension respectifs (9).

5. Procédé selon l'une quelconque des revendications précédentes, dans lequel l'étape consistant à obtenir une estimation de la charge de battement de pale pour chaque pale d'éolienne (4) comprend l'estimation de la déflexion du bout de la pale d'éolienne pour chaque pale d'éolienne (4).

6. Procédé selon l'une quelconque des revendications précédentes, dans lequel l'étape de mesure d'au moins un paramètre des pales (4) de l'éolienne (1) comprend la mesure d'un moment de battement pour chacune des pales (4) de l'éolienne.

7. Procédé selon l'une quelconque des revendications 1-5, dans lequel l'étape de mesure d'au moins un paramètre des pales (4) de l'éolienne (1) comprend la mesure de la tension de chacun des câbles de prétension (9).

8. Procédé selon l'une quelconque des revendications précédentes, comprenant en outre l'étape de mesure d'une ou plusieurs conditions de vent à l'emplacement de l'éolienne (1), et dans lequel l'étape d'estimation d'une charge de battement de pale pour chaque pale d'éolienne (4) est en outre réalisée sur la base de la ou des conditions de vent mesurées.
